(19) Europäisches Patentamt / European Patent Office / Office européen des brevets

(11) **EP 4 455 111 A1**

(12) **EUROPEAN PATENT APPLICATION**

(43) Date of publication:
**30.10.2024 Bulletin 2024/44**

(21) Application number: **24171416.1**

(22) Date of filing: **19.04.2024**

(51) International Patent Classification (IPC):
$C04B\ 41/00^{(2006.01)}$     $C04B\ 41/52^{(2006.01)}$
$C04B\ 41/86^{(2006.01)}$     $C03C\ 8/04^{(2006.01)}$
$C03C\ 8/14^{(2006.01)}$     $C04B\ 33/34^{(2006.01)}$
$E03D\ 11/02^{(2006.01)}$

(52) Cooperative Patent Classification (CPC):
(C-Sets available)
**C04B 41/009; C04B 33/34; C04B 41/52;
C04B 41/86; E03D 11/02;** C04B 2111/805;
C04B 2111/82       (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.04.2023 US 202363461980 P
16.04.2024 US 202418637371**

(71) Applicant: **Kohler Co.
Kohler, WI 53044 (US)**

(72) Inventors:
• **Ochoa, Rafael Eduardo
Kohler, 53044 (US)**
• **Faieta, Sandra
Kohler, 53044 (US)**
• **Doege, Megan
Kohler, 53044 (US)**

(74) Representative: **Barker Brettell LLP
100 Hagley Road
Edgbaston
Birmingham B16 8QQ (GB)**

(54) **CERAMIC GLAZE**

(57) A sanitary apparatus may be, among other things, a toilet bowl, a sink, a basin, a bathtub, a bidet, or a urinal. The sanitary apparatus includes a water vessel, and a water drain configured to empty the water vessel. The water vessel includes a clay body, a first layer over the clay body, the first layer is at least in part an opacified glaze, and a second layer over the first layer, the second layer is at least partially transparent and includes silica and alumina in a predetermined ratio of 9 or greater.

FIG. 1A

(52) Cooperative Patent Classification (CPC): (Cont.)

C-Sets
**C04B 41/009, C04B 33/00;**
**C04B 41/52, C04B 41/5022, C04B 41/5035**

## Description

## CROSS-REFERENCE TO RELATED APPLICATION

This application claims the benefit of and priority to U.S. Provisional Patent Application No. 63/461,980, filed April 26, 2023, and U.S. Patent Application No. 18/637,371, filed April 16, 2024, which are incorporated herein by reference.

## FIELD

The present disclosure relates generally to ceramic glazes used in sanity ware. The disclosure relates to an optimized glaze composition for sanitaryware (sanitary ware) that efficiently improves smoothness and antibacterial activity, without affecting the original glaze appearance.

## BACKGROUND

Improvements in the cleanability of ceramic glazes are sustainable strategies that reduce both, the water used for cleaning and the emission of surfactants to the environment. U.S. Patent No. 10,793,721 describes commercial easy-to-clean products made with the sol-gel technology. The main disadvantage of the sol-gel approach is the excessive cost of the chemical precursors to prepare the coating, with the inevitable impact on the cost of the final ceramic product. U.S. Patents Nos. 6,548,162 and 10,183,896 relate to double-layer sanitaryware glazes, the former is oriented toward the development of an easy-to-clean smooth surface, and the latter is focused on the development of a glaze with antimicrobial efficacy. The present disclosure delivers a double-layer glaze that is smooth and antimicrobial at the same time.

## BRIEF DESCRIPTION OF THE DRAWINGS

Exemplary embodiments are described herein with reference to the following drawings, according to an exemplary embodiment.

FIGS. 1A and 1B illustrate toilets according to an exemplary embodiment.
FIG. 2 illustrates an example chart for roughness.
FIGS. 3A and 3B illustrates a comparison of glazes of different material.
FIG. 4 illustrates example color values for the glaze.
FIGS. 5A and 5B illustrates another comparison of glazes of different material.
FIGS. 6A and 6B illustrates another comparison of glazes of different material.
FIG. 7 is a flowchart for the manufacturing process for a sanitaryware apparatus.
FIG. 8 is a flowchart for the manufacturing process for each layer of the glaze of the sanitary ware apparatus.
FIG. 9 is a flowchart for the manufacturing process for a sanitaryware apparatus including a single combined firing.
FIG. 10 is a flowchart for the manufacturing process for a sanitaryware apparatus including a single combined firing.

## DETAILED DESCRIPTION

A surface layer or layers, or glaze, provided by the following embodiments may be applied to a variety of sanitary ware devices or plumbing fixtures. The term "plumbing fixture" refers to an apparatus that is connected to a plumbing system of a house, building, or another structure. The term "plumbing fixture" may include toilets, bidets, faucets, showerheads, bathtubs, urinals, basins, and kitchen sinks. The term "bathroom fixture" and "kitchen fixture" may more specifically refer to individual types of plumbing fixtures found in the bathroom or kitchen, respectively, and these terms may be overlapping in certain examples (e.g., faucets). While each of the fluidic devices described herein may be described as being included in a single type of plumbing fixture, it should be understood that the present disclosure is not limited thereto and that each of the fluidic devices described herein may be included in or used in conjunction with any type of plumbing fixture.

The term "sanitary ware" describes a subset or category of plumbing fixtures designed for hygiene and cleanliness. Many of the plumbing fixtures described herein may also be considered sanitary ware apparatus such as toilets, sinks, bidets, and urinals. The sanitary ware apparatus includes at least a water vessel configured to contain water and/or other materials and a drain configured to empty water or other material from the water vessel.

For each of the example sanitary ware apparatus, it should be noted that the shapes and configurations of the water vessel, drain, and the internal components (may vary from the embodiments shown and described herein, and that the embodiments disclosed herein are not intended as limitations. It should be noted that various components of the toilet may be made of vitreous china. It should be noted that various components of the toilet may be polymeric and/or over molded or otherwise fixed to the toilet.

Three example strategies to improve the cleanability of sanitaryware glazes include the use of commercial fluoropolymer films, sol-gel coatings, and a double-layer glaze application. The fluoropolymer films create a hydrophobic surface that increases the water contact angle (>90°), enabling water to roll off to improve cleanability. The fluoropolymer films are applied at room temperature on the glaze after firing, with the main disadvantage of poor durability. The sol-gel coatings are organic-inorganic composites with an amorphous nanoscale structure. The composition of the sol-gel coating has a significant effect on the properties. Ceramic components give hardness and durability while polymer components provide repelling properties. The sol-gel coating may be applied at low temperatures close to 100°C on the glaze after firing.

In the double-layer glaze strategy, a transparent glaze is applied on the white glaze surface. The second layer, or transparent glaze, is applied to cover the rugosity of the first layer, i.e., the white glaze surface. The opacifier crystals present in the first layer which provides a white color penetrate the glaze surface increasing thus the roughness. The second layer covers those crystals, improving the smoothness of the glaze. The double-layer glaze is a cost-effective approach due to the raw materials are similar to those in the first layer.

The level of roughness in a ceramic surface is measured by a parameter called average roughness, (Ra) in nanometers. The white sanitaryware glaze is about 100 nm of Ra, and a smooth glaze is <70 nm of Ra. In U.S. Patent No. 6,548,162 the sanitary ware glaze achieves the Ra < 70 nm by covering the first opacified layer with a second layer without zirconium silicate. U.S. Patent No. 6,548,162 states that the performance of the glaze does not depend on the chemical composition.

However, in the present disclosure, it was found that the average roughness of the double-layer glaze can be reduced by modifying the silica-alumina ratio of the molecular formula in the transparent layer. The lowest Ra value was obtained in the present disclosure at a silica-alumina ratio higher than 9 and even more significantly with a silica-alumina ratio higher than 13.

According to the oligodynamic effect metals can show biocidal action (e.g., the ability to substantially eliminate) on bacteria at low concentration. Ag and Zn are oligodynamic metals used in ceramic glazes because of they do not negatively impact the white color of the glaze. Sn is also reported as an oligodynamic element but may be less effective as an antibacterial agent in ceramic glazes because of its low antibacterial strength. Further Sn may be an opacifier but have higher cost in comparison to Zirconium.

To measure antibacterial efficacy there are several testing methods for different materials, and the latest focused on ceramic surfaces is the ISO 17721-1:2021. The methods include the factor R for antimicrobial activity. R the difference between a logarithm (e.g., 10 base) of the number of bacteria (expressed as colony-forming units CFU) in a control sample and a logarithm (e.g., 10 base) of the number of bacteria in a treated sample, after an incubation of 24 hours. The antimicrobial efficacy is considered for $R \geq 2$ which is equal to 99% of killed bacteria, this is because higher bacteria than 1% are capable of re-colonizing the surface due to its exponential growth.

A reduction in bacteria after 24 hours has been reported in smooth surfaces because of the diminution of sites for bacterial attachment, but not in the level of antimicrobial efficacy of $R \geq 2$. The particle size distribution and the optimized chemical composition of the transparent glaze in the present disclosure, provide a smooth surface with low sites for bacterial attachments that also requires a low oligodynamic strength to achieve antibacterial efficacy. In the present disclosure, the low requirement of oligodynamic strength allows the use of zinc and tin in a predetermined range to achieve antimicrobial efficacy.

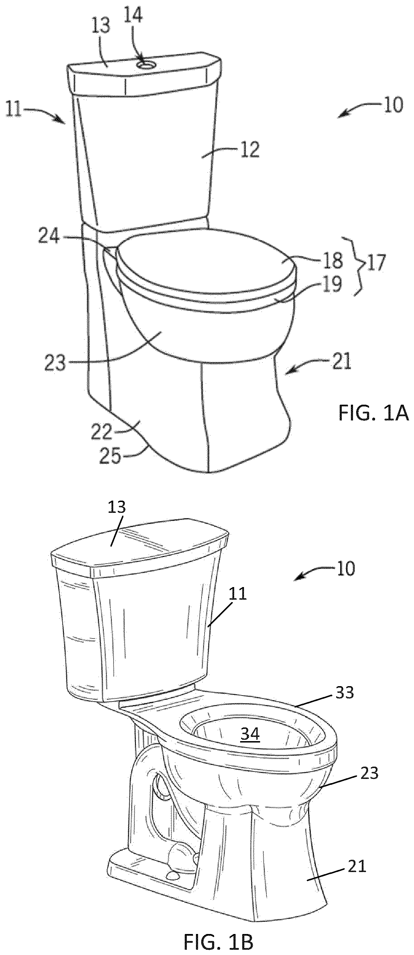

While other sanitary ware and/or plumbing fixture implementations are described FIGS. 1A and 1B illustrate toilets according to exemplary embodiments of the present disclosure.

Figures 1A and 1B illustrate an exemplary embodiment of toilet 10 (e.g., skirted in Figure 1A and not skirted in Figure 1B with the seat and cover removed for illustrative purposes) that includes a tank 11, a pedestal 21 (or base), a seat assembly 17, including at least bowl 23, and a coupling or mounting assembly. The tank 11 may include a reservoir 12 for storing the water used during operational (or flushing) cycles, a lid (or cover) 13 for providing selective access into the reservoir 12, and an actuator 14 that is configured to initiate an operational cycle when activated. The actuator 14 or flush mechanism may be a button configured to activate when depressed (or pulled) a predetermined distance or when touched, a lever configured to activate when rotated a predetermined angular travel, or any suitable device configured to activate based upon an input manipulation by a user.

As included in both types of toilets 10 and illustrated in Figure 1B, the toilet bowl 23 includes a rim 33 and an inner surface 34. The surface or glaze provided by the following embodiments may be applied to the rim 33 and the inner surface 34 of the bowl 23.

It should be noted that the shapes and configurations of the tank 11, pedestal 21, seat assembly 17, and the internal components (including the trapway and other features) may vary from the embodiments shown and described herein, and that the embodiments disclosed herein are not intended as limitations. It should be noted that various components of the toilet may be made of vitreous china.

It should be noted, for example, that although the exemplary embodiment of the toilet 10 is shown configured with the tank 11 formed separately from the pedestal 21 and later coupled to the pedestal 21, the tank 11 may be integrally formed with the pedestal 21 as a one-piece design. In other words, the toilet 10 may be a one-piece design, a two-piece design, or have any suitable configuration. For example, rather than a floor-mounted toilet system as shown in FIG. 1, the toilet may be a wall-hung toilet that includes one or mounting structures for securing the toilet to a wall. The wall-hung toilet may omit a tank. The wall-hung toilet may include a mounting fixture that connects with a wall of a building, or a cabinet configured to support the toilet. At least two water passages may connect to the toilet. The water passages include a water supply passage connected to the water supply and a drain passage connected to a septic, sewage, or other sanitary system.

The following description of various toilet features is therefore intended as illustration only of one possible embodiment, and it should be understood by those reviewing the present description that similar concepts or features may be included in various other embodiments.

The tank 11 may include an inlet opening configured to receive water from a coupled water supply, such as from a hose (e.g., line, tube). The tank 11 may also include an inlet valve assembly or other device configured to control the flow of water from the water supply into the tank through the inlet opening. Within the tank 11 may be provided a float device for controlling the inlet valve assembly, such as by opening the valve to refill the reservoir 12 of the tank 11 after an operational cycle and closing the valve when the water in the reservoir 12 reaches a preset volume or height. The tank 11 may also include an outlet opening configured to transfer (e.g., conduct) the water stored in the reservoir 12 of the tank to the pedestal 21 upon activation of the actuator 14.

The pedestal 21 may include toilet bowl 23. The tank 11 may include an outlet valve assembly or other device configured to control the flow of water from the tank into the pedestal 21 through the outlet opening. The toilet bowl 23 is an example water vessel including a surface or glaze provided by the following embodiments.

The pedestal 21 (or base) of the toilet 10 may include a wall 22 having any suitable shape that is configured to form a bowl 23 having an opening formed by an upper rim at the top of the opening. The pedestal 21 may also be configured to include a plurality of walls having varying shapes that together form a bowl having an opening formed by a rim. The wall 22 of the pedestal may extend downward and/or rearward from the bowl 23 to form a lower portion 25 configured to support the pedestal 21 and the toilet 10. The lower portion 25 may be formed by the end (e.g., lower rim) of the wall 22, or may include a member that extends generally in a horizontal plane from one or more than one end of the wall. The pedestal 21 may also include a top member 24 that extends between two sides of the wall 22 (or between two opposing walls) and is provided rearward (or behind) the bowl 23, wherein the top member 24 forms a plateau for supporting the tank 11, such as the bottom surface of the reservoir 12 of the tank 11. The top member 24 may include an inlet opening that may be aligned with the outlet opening of the tank 11, such as when the tank 11 is coupled to (or resting above) the pedestal 21, wherein water is selectively transferred (e.g., conducted) from the tank 11 through the outlet opening of the tank to the pedestal 21 through the inlet opening of the pedestal 21, when the toilet 10 is activated through the actuator 14. The outlet valve assembly may control the flow of water from the tank 11 to the pedestal 21.

The plateau formed by the top member 24 of the pedestal 21 may also provide for coupling of the seat assembly 17 to the pedestal 21 of the toilet 10. For example, the top member 24 may include one or more than one opening, wherein each opening is configured to receive a fastening device (e.g., bolt, screw, etc.) to couple (e.g., attach) the seat assembly 17 to the top member 24 of the pedestal 21. As another example, the top member 24 may include one or more than one fastening device (e.g., bolts, recessed nuts, etc.) integrally formed therein (i.e., already provided connected or coupled to the pedestal 21), wherein the fastening device may be used to couple or secure at least a portion of the seat assembly 17 to the pedestal 21.

The bowl 23, or water vessel, of the pedestal 21 may be configured to include a receptacle (e.g., sump) and an outlet opening, wherein the water and waste is collected in the receptacle until being removed through the outlet opening, such as upon activation of the actuator 14. The pedestal 21 may also include a pedestal internal passageway, such as a trapway, that connects the outlet opening or discharge outlet of the bowl 23 to a drain or soil pipe. The trapway is an example drain configured to provide a path for water and other materials to exit or otherwise drain from the toilet bowl 23. The passageway, or trapway, generally includes a first portion, a second portion, and a weir separating the first and second portions. The first portion of the passageway may extend from the outlet opening of the bowl 23 at an upwardly oblique angle to the weir. The second portion of the passageway may extend from the weir downwardly to the exiting device, such as the drain or soil pipe.

Between operational cycles (e.g., flush cycles) of the toilet 10, the water (and waste) is collected in the first portion of the trapway (in addition to the receptacle of the bowl 23), such that the weir prohibits the water from passing past the weir and into the second portion of the trapway. A flushing cycle may begin upon activation of the actuator 14. Upon activation of the actuator, additional water (e.g., fresh water and or grey water) may be discharged into the bowl 23 of the pedestal 21, resulting in the flushing action and waste removal through the soil pipe. The flushing cycle may include generation of a siphon to assist the flushing action and waste removal.

The seat assembly 17 may include a cover member 18 (e.g., lid), a seat member 19 (e.g., ring member), and a hinge. The seat member 19 may be configured to include an annular member that encircles an opening, wherein the annular member provides a seating surface for the user of the toilet 10. The seat member 19 may also be pivotally coupled (e.g., attached) to the hinge, wherein the seat member may rotate (or pivot) about the hinge, such as between a first lowered or seated position and a second raised or upright position. The cover member 18 may be configured to be round, oval, or any other suitable shape. Typically, the profile or shape of the outer surface of the cover member will be configured to match (i.e., to be substantially similar) to the profile of the outer surface of the seat member to improve the aesthetics of the seat assembly and toilet. The cover member 18 may also be coupled to the hinge, wherein the cover member may rotate (or pivot) about the hinge, such as between a first down lowered or down position and a second raised or upright position. The cover member 18 may be provided above the seat member in the down position to thereby cover the opening of the seat member 19, as well as to conceal the inside of the bowl 23 of the pedestal 21. The cover member 18 may be configured to rest against the outside surface of the tank 11, when the cover member 18 is in the upright position, such that the cover member 18 remains in the upright position in order for a user to sit upon the seat member 19.

The toilet 10 includes one or more of the surface materials or glazes provided by the following embodiments and provided at the toilet bowl 23 (e.g., including the rim 33, the inner bowl surface 34 and/or a sump surface), the tank 11, or the pedestal 21. Other implementations may be possible. The glaze is easy to clean and antimicrobial. The glaze of the present disclosure includes at least two layers. The first layer is an opacified glaze, extensively used in the production of sanitary ware, which is applied directly to the clay body surface and its fired thickness is around 1 mm. The second layer is a transparent layer described in more detail below and may have a fired thickness of 0.1 mm or less. It should be noted that the clay body may be considered a base layer (or third layer). Thus, construction of a water vessel such as the toilet bowl 23 or a basin may include a base layer clay body, a first layer glaze, and a second layer glaze.

The second layer is a transparent glaze that contains in weight percentage less than 5% of zinc oxide (ZnO), or in some examples less than 5.4% ZnO, and less than 2% of tin oxide (SnO2). The silica/alumina ratio of its molecular formula is higher than 13 to encourage a high content of amorphous phase. The silica/alumina ratio may be the mass of silica in any uniform sample or amount to the mass of alumina in the same uniform sample or amount. In some examples, the inverse, or the alumina/silica ratio, may be specified.

The mean particle size (D50) of the transparent layer is <3 $\mu$m and is prepared using silica with a mean particle size (D50) <6 $\mu$m. The transparent glaze is sprayed on top of the first layer before firing, achieving a fired thickness of less than 0.07 mm. In one example, the first layer is approximately 10 times thicker than the second layer. In one example, the first layer is 5-20 times thicker than the second layer. Other ingredients in the transparent layer may include but are not limited to Ca, Mg, K, Na, Fe, P, Ti, Li, and Ag.

One example for the materials of the water vessel may include a first layer with an opacified glaze and a second layer over the first layer. Three molecular formulas of transparent layers may be prepared with silica/alumina ratios by mass of 7, 9 and 13. The silica particles have a mean particle diameter (D50) <15 $\mu$m. The transparent formulas may be milled at a mean particle diameter (D50) <3 $\mu$m.

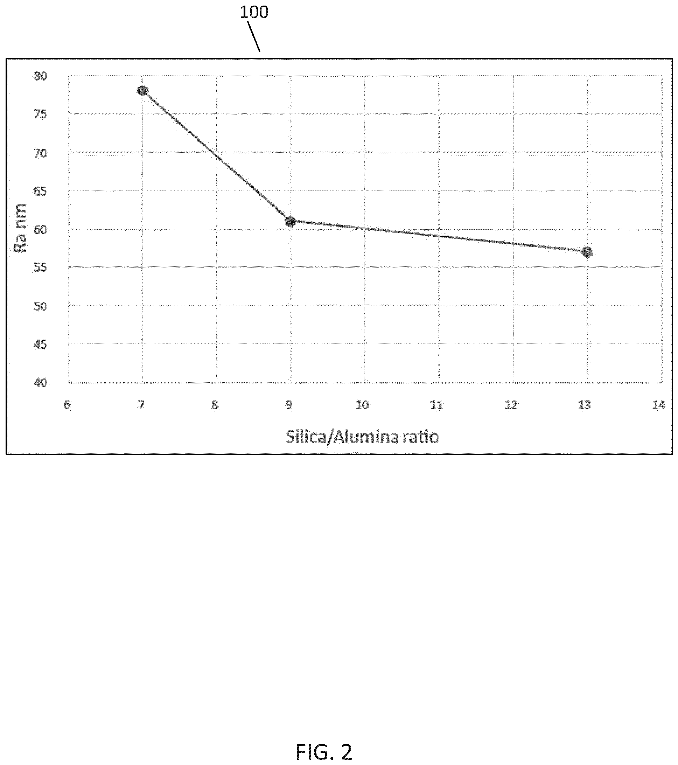

For each silica-alumina ratio, the transparent layer (firing thickness of 0.2 mm) was sprayed on tiles with a first layer (firing thickness of 0.8 mm) of opacified sanitaryware glaze. The tiles were fired in a sanitaryware cycle with a maximum temperature of the kiln (e.g., in the range 1100-1300 °C such as 1230 °C). The average roughness (Ra nm) was measured as a function of the silica/alumina ratio. Example results are presented in Figure 2.

Figure 2 illustrates the average roughness Ra on the vertical axis that was measured in each of the three examples as a function of the silica/alumina ratio. The elimination of crystals on the surface reduces the average roughness of the ceramic glaze. As the silica/alumina ratio is increased the average roughness is reduced, which indicates that at a silica/alumina ratio of 13 less crystals are present because of the improvement in the amorphous phase of the transparent glaze.

One example for the materials of the water vessel may include a first layer with an opacified glaze and a second layer over the first layer with the same or similar color. The color of the transparent layer (second layer) is different from the color of the opacified white glaze (first layer). The term "over" may indicate that the partially transparent property of the second layer means that the underlying color of the first layer impacts the color of the second layer, as it is viewed "over" the first layer.

The spectrophotometer is the equipment used to measure the difference in color between two samples. There are three readings from the spectrophotometer: the color values L, a, and b.

The L value may be referred to as lightness or brightness and represents how bright the sample is overall. The L value may be in a range from 0 to 100. The value 0 may represent perfect black and the value 100 may represent perfect white. The a and b values may be referred to as chromatic values. Each chromaticity may indicate a range between two colors based on human vision.

The a and b values can be either positive or negative. The greater the a value, the redder the sample, the lower, the greener the sample. The greater the b value, the yellower the sample, the lower, the bluer the sample. In one example, E is considered a color quantity value. The color quantity value of the first layer may be compared to the color quantity value of the second layer over the first layer. In one example, the first color quantity for the first layer and the second color quantity for the second layer over the first layer have a difference less than 1.

The parameter $\Delta E$ may be used to compare the color of two samples. Equation 1 provides an example calculation for the difference $\Delta E$ between the color quantity values of the first layer and the second layer over the first layer:

$$\Delta E = [(\Delta L)^2] + [(\Delta a)^2] + [(\Delta b)^2]^{\frac{1}{2}} \quad \text{Eq. 1.}$$

Wherein L is lightness and $\Delta L$ is a difference in lightness between the first layer and the second layer over the first layer, wherein a is the first color quantity and $\Delta a$ is a difference in the first color quantity between the first layer and the second layer over the first layer, and wherein b is the second color quantity and $\Delta b$ is a difference in the second color quantity between the first layer and the second layer over the first layer.

As is expressed in the above formula the greater $\Delta E$, the bigger the difference in color between the two samples. $\Delta E$ should be less than 1 to indicate a similar color between the samples.

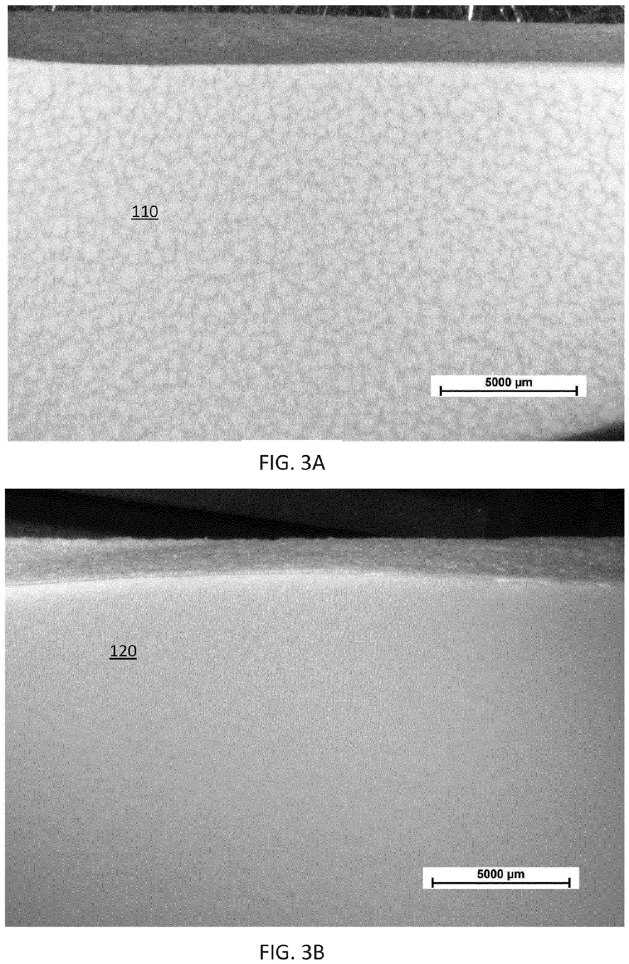

Because of the lack of opacifier crystals in the transparent layer, the double-layer glaze may look like a mottled surface, as is shown in Figure 3a which is a commercial double-layer glaze product where the transparent glaze is sprayed in the bowl area. Comparing the area of the bowl with the first layer of this commercial product, the $\Delta E= 1.75$, above 1, because of the lack of white color in the transparent glaze ($\Delta L$=-1.72, $\Delta$=-0.01 and $\Delta a$=0.28) which impaired the original glaze appearance.

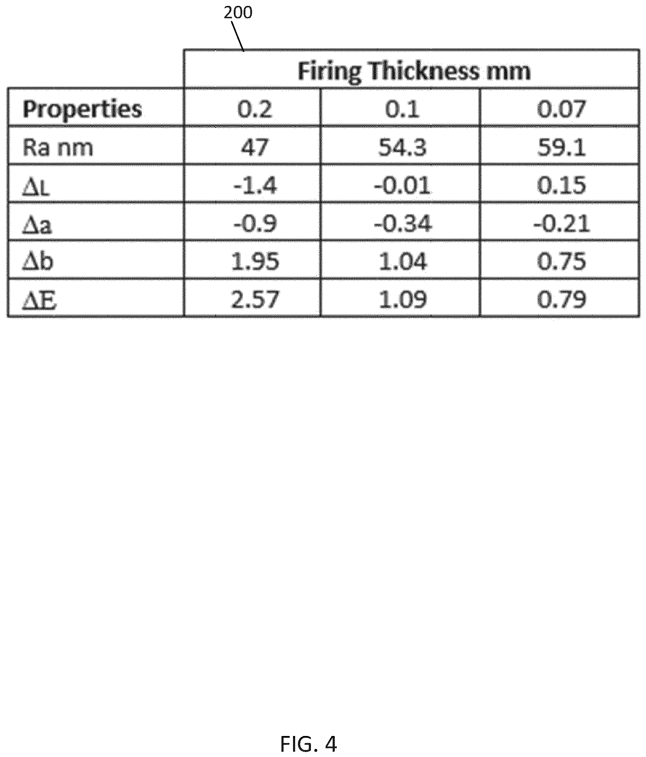

Figures 3A and 3B illustrate a comparison of glazes. Figure 3A is a mottled surface 110 of the commercial double-layer glaze product. Figure 3B illustrates an improved surface 120 from embodiments in the present disclosure. The improved surface 120 is free of artifacts or the pattern seen in the mottled surface 110 and the resolution shown on the order of 5000 microns per unit length. In Figure 3B, the mottled surface of the double-layer glaze was eliminated by reducing the thickness of the transparent layer below 0.07 mm. Because of the thickness reduction, the opacified crystals penetrate easily into the surface to increase the roughness. However, due to the optimized silica/alumina ratio of the present disclosure, even at the low thickness of 0.07 mm, the glaze surface is smooth enough to maintain the average roughness <70 nm, as shown in the Ra data presented in Figure 4 or table 200.

Figure 4 illustrates a table 200 which includes color values and thickness for varying firing thickness of the transparent layer. The color parameters L, a, and b, may be used to calculate the color quantity value E. Similarly, the differences between the color parameters of the first layer and second layer over the first layer are $\Delta L$, $\Delta a$, and $\Delta b$, while the difference in color quantity value is $\Delta E$.

The average roughness of the double-layer glazes made from different thicknesses of the second layer is presented in table 200. The transparent layer was made with a silica/alumina ratio of 13, milled at D50<3 $\mu$m, and using silica particles with D50<6 $\mu$m. As is shown in table 200, with 0.2 mm of firing thickness, it was obtained average roughness of 47 nm. While in the same conditions of silica/alumina ratio and firing thickness but using silica particles with a D50 < 15 $\mu$m, it was obtained an average roughness of 57 nm as is shown in Figure 1, i.e., a reduction of 10 nm was obtained using silica D50<6 $\mu$m instead of silica D50 < 15 $\mu$m.

The table 200 illustrates that the $\Delta E$ is reduced from 2.57 to 0.79 by reducing the thickness from 0.2 to 0.07 mm., presenting average roughness <70 nm in all the samples. Hence, the best conditions for good appearance ($\Delta E$ < 1), and smoothness (Ra < 70 nm), may be obtained by applying 0.07 mm of the transparent glaze as a second layer, made with silica/alumina ratio of 13, milled at D50 < 3 $\mu$m, and using silica particles with D50 < 6 $\mu$m.

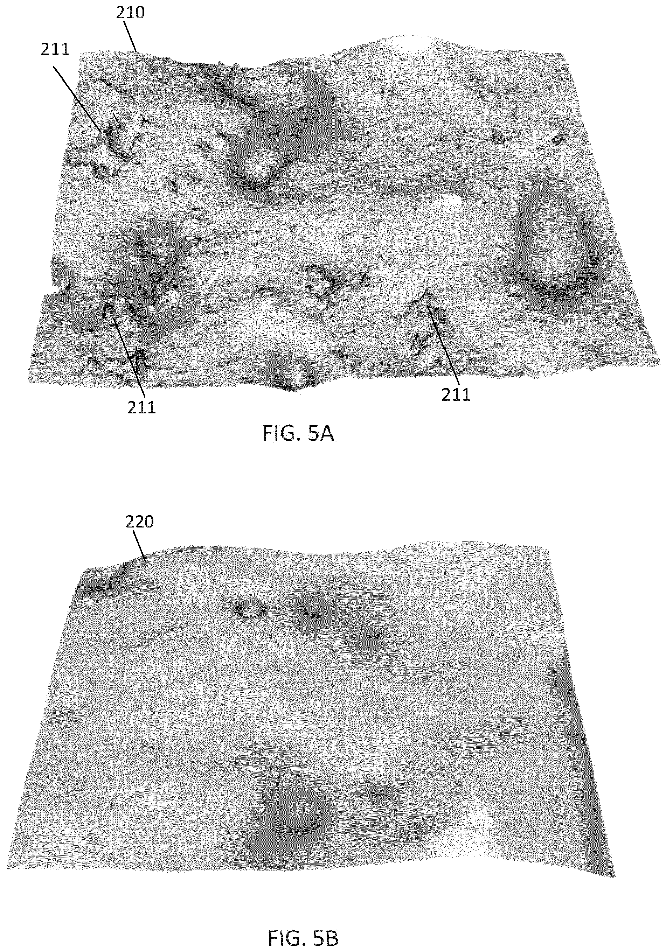

Figures 5A and 5B illustrate microscopic images of the results. Figure 5A illustrates a rough surface 210 including one or more picks 211 that may be present in conventional glazes. Figure 5B illustrates a glaze with a smooth surface 220 according to the present disclosure.

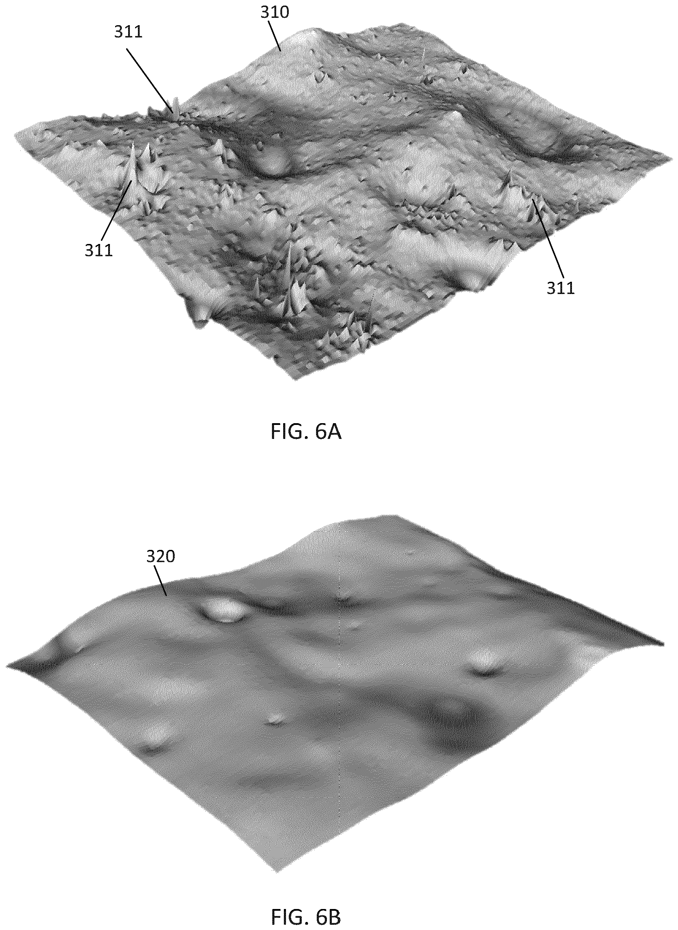

Figures 6A and 6B illustrate microscopic images of the results. Figure 6A illustrates a rough surface 310 including one or more picks 311 that may be present in conventional glazes. Figure 6B illustrates a glaze with a smooth surface 320 according to the present disclosure.

Double-glazed tiles may be prepared with 5% of zinc oxide (ZnO) (by weight) in the transparent glaze that was milled at D50 < 3 $\mu$m, with D50 of silica particles <6 $\mu$m, and a silica/alumina ratio of 13. The firing thicknesses of the first and transparent layers were 0.8 and 0.07 mm respectively. To evaluate the antimicrobial efficacy of the combined mechanisms of smoothness and oligodynamic effect of Zn, the tiles may be subjected to antimicrobial testing according to ISO 17721-1:2021. The R-value obtained was >2 against S. Aureus, but only 1.92 against E. Coli. It has been reported that S. Aureus is a less resistant organism than E. Coli, which concurs with the results of the present disclosure. To increase the antimicrobial effect, 2% of tin oxide ($SnO_2$) was added to the transparent glaze. As tin is also an opacifier, by using tin oxide ($SnO_2$) it was possible to increase the firing thickness of the second layer to 0.15 mm, obtaining $\Delta E$=0.9, and Ra=52.8. The R-value of the transparent glaze with the additional 2% of tin oxide ($SnO_2$) was >2 against both bacteria.

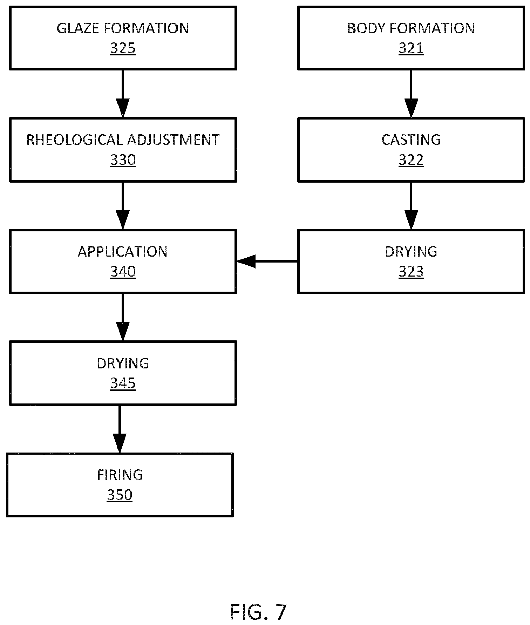

Figure 7 illustrates a general sequence for the manufacturing process of the sanitaryware apparatus according to the present disclosure. The manufacturing process of Figure 7 may be applied to any sanitaryware apparatus such as toilets, bidets, basins, bathtubs, or other devices. Additional, different or fewer processes may be included.

A sanitaryware apparatus may include a body forming the main structure of the apparatus and a glaze that is sprayed or otherwise applied to the body. Figure 7 illustrates a process 321 for forming the body. The body may be formed from clay, quartz and feldspar. The materials of the body may be mixed with water and dispersed thoroughly to form a uniform slip using an agitator or mixing device. The slip may be screened. The slip may be separated (e.g., magnetically separated). At process 322, the body may be cast in a mold. The mold may be formed of resin or plaster of Paris and include one or more side sections and a top section that fit together to form an airtight cavity. The body is removed from the mold. The body may be washed and cleaned. At process 323, the body is dried. The dried body may be tested for cracks.

As shown by process 325, the first and second layers of the glaze may be formed separately, as described in more detail herein. In some examples, the glaze may be prepared by milling, screening, and separation.

As shown by process 330, a rheological adjustment may be applied. In the rheological adjustment, the specific gravity of the glaze is adjusted by adding water and/or a thickener, emulsifier, or viscosity modifier.

As shown by process 340, the glaze is applied to the body of the sanitary ware apparatus. Process 340 may include spraying a first layer over the clay body and spraying a second layer over the clay body.

As shown by process 345, the apparatus may be again dried after the glaze is applied. As shown by process 350, the glaze and sanitaryware apparatus are fired in a kiln at a predetermined temperature and a for a predetermined time period. The temperature and time period may be selected according to the composition or thickness of the first layer or the second layer.

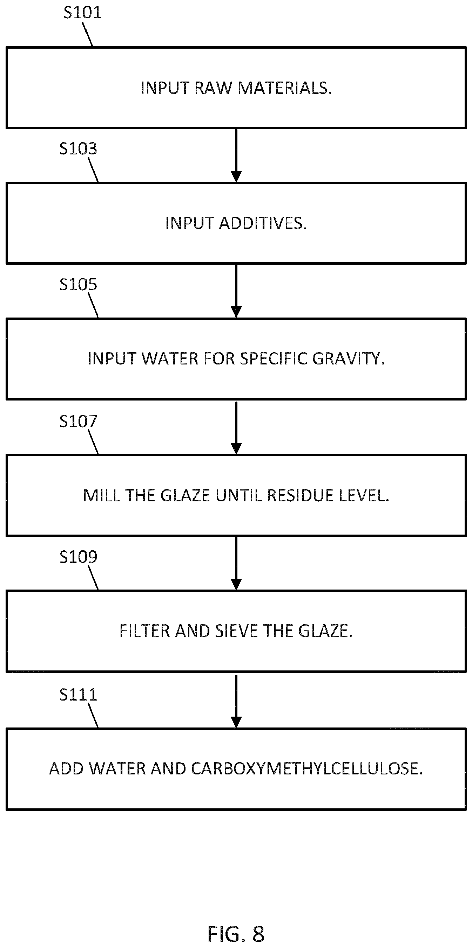

Figure 8 illustrates a process (e.g., corresponding to process 325 and 330) for each of the first layer and the second layer of the glaze. In other words, the process of Figure 8 may be performed for the first layer and repeated for the second layer. The first layer may be created before the second layer. The first layer and the second layer may be created at substantially different times (e.g., and in different mills).

At act S101, the raw materials are input to a mill with water and including all or a combination of feldspar, silica, talc, wollastonite, zinc oxide, kaolin, opacifier, calcium carbonate, and frit.

At act S103, one or more additives are input to the mill. In an example for the first layer (i.e., the first time act 103 is performed) additives include binders, biocide, and deflocculants. Each of the additives may be no more than 1% of the mass of the mixture. In some examples, the sum of the additives may be no more than 1% of the mass of the mixture.

In an example for the second layer (i.e., the second time act 103 is performed) additives include binders, biocide, and deflocculant Each of the additives may be no more than 1% of the mass of the mixture. In some examples, the sum of the additives may be no more than 1% of the mass of the mixture.

At act S105, additional water is input or provided to the mill. In an example for the first layer (i.e., the first time act 103 is performed) the water is provided to achieve a target specific gravity in a predetermined range. One example range is 1.75 to 1.85 (e.g., 1.80 to 1.81) grams per milliliter. Other example ranges may be used for example is 1.6 to 1.9 grams per milliliter.

In an example for the second layer (i.e., the second time act 103 is performed) the water is provided to achieve a target specific gravity in a predetermined range. One example range is 1.7 to 1.8 (e.g., 1.76 to 1.78) grams per milliliter. Other example ranges may be used for example is 1.7 to 1.9 grams per milliliter. The specific gravity range for the first layer may be different than the specific gravity range for the second layer. The specific gravity range for the first layer may be greater than the specific gravity range for the second layer.

At act S107, each of the respective layers is milled until a predetermined residue level. In an example for the first layer (i.e., the first time act 103 is performed) the glaze is milled until the residue reaches 0.01 to 0.1% in #325 mesh.

In an example for the second layer (i.e., the second time act 103 is performed) the glaze is milled until the residue reaches 0.0 to 0.08% in a #325 mesh.

At act S109, each of the respective layers is filtered and/or sieved. In an example for the first layer (i.e., the first time act 103 is performed) is ferro-filtered and sieved through a mesh from #100 to #200.

In an example for the second layer (i.e., the second time act 103 is performed) is ferro-filtered and sieved through a mesh from #100 to #200.

At act S107, a rheological adjustment may be made using an addition of water and/or binders.

In an example for the first layer, water is added to reach a specific gravity between 1.7 and 1.9 grams/milliliter.

In an example for the second layer, water is added to reach a specific gravity between 1.7 and 18 grams/milliliter and viscosity from 10 to 40% torque The specific gravity of the transparent glaze may be lower to improve fluidity.

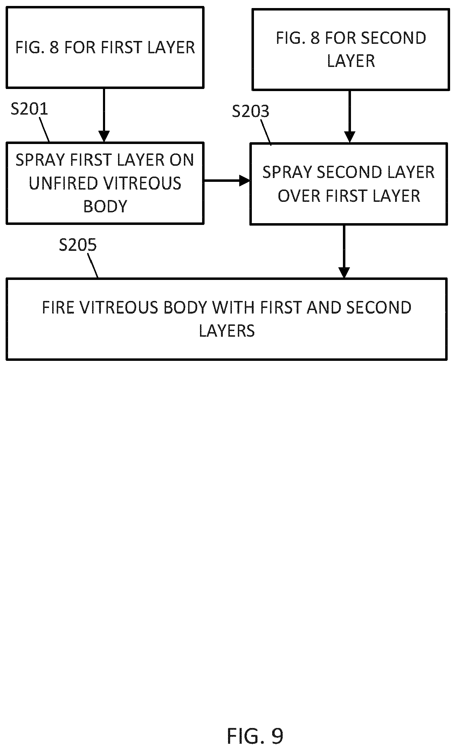

Figure 9 illustrates a process (e.g., corresponding to process 340 and 350) for each of the first layer and the second layer of the glaze and continued from Figure 8.

At act S201, the first layer is sprayed over the unfired vitreous body. The first layer may be sprayed for a duration or volume sufficient to apply the first layer in a predetermined thickness. An example predetermined thickness for the first layer is 0.8 millimeters on in a range of 0.6 to 1 millimeters.

At act S203, after S201, the second layer is prayed over the first layer in a predetermined thickness. An example predetermined thickness for the second layer is 0.07 millimeters or 0.05 to 0.15 millimeters.

At act S205, the vitreous body including the first layer and the second layer is fired in a kiln. In one example, the vitreous body including the first layer and the second layer is fired at a predetermined temperature from 1215 to 1249 degrees Celsius for a predetermined time period from 12 to 20 hours. The predetermined time period may be measured from cold to cold (before heating to after cooling).

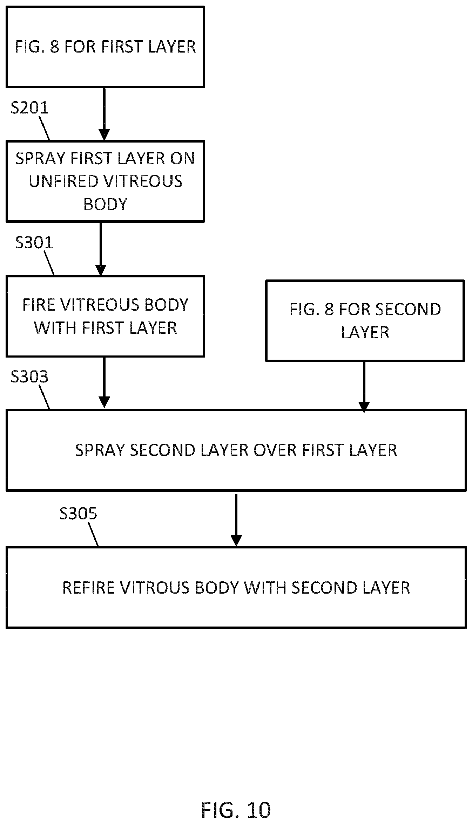

Figure 10 illustrate another embodiment where the first and second layers are sprayed and fired sequentially.

As described above, at S201, the first layer is sprayed on the vitreous body of the sanitary ware.

At act S301, the vitreous body and the first layer of glaze is fired in the kiln. This firing may be referred to as a first thermal cycle and a first predetermined temperature. The predetermined temperature may be from 1215 to 1249 degrees Celsius for a predetermined time period from 12 to 20 hours. The predetermined time period may be measured from cold to cold (before heating to after cooling).

At act S303, the second layer is sprayed over the first layer.

At act S305, the vitreous body is re-fired with the first layer and the second layer. The refiring is a second thermal cycle at a second predetermined temperature. The second predetermined temperature may be less than the first predetermined temperature. The second predetermined temperature may be from 1050 to 1200 degrees Celsius for a second predetermined time period. The second predetermined time period may be longer than the time period for the first thermal cycle. An example of the second predetermined time period may be 43 hours. The second predetermined time period may be measured from cold to cold (before heating to after cooling).

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A toilet comprising:

   a toilet bowl;
   a rim defining an opening of the toilet bowl;
   wherein the toilet bowl or the rim includes:

   a body;
   a first layer over the body, the first layer is at least in part an opacified glaze; and
   a second layer over the first layer, the second layer is at least partially transparent and includes silica and alumina in a predetermined ratio of 9 or greater.

2. The toilet of claim 1, wherein color values including lightness, a first chromacity value, and a second chromacity value indicate a first color quantity for the first layer and a second color quantity for the second layer.

3. The toilet of claim 2, wherein a difference ($\Delta E$) between the first color quantity and the second color quantity is provided by:

$$\Delta E = [(\Delta L)^2] + [(\Delta a)^2] + [(\Delta b)^2]^{\frac{1}{2}}$$

wherein L is lightness and $\Delta L$ is a difference in lightness between the first layer and the second layer over the first layer, wherein a is the first color quantity and $\Delta a$ is a difference in the first color quantity between the first layer and the second layer over the first layer, and wherein b is the second color quantity and $\Delta b$ is a difference in the second color quantity between the first layer and the second layer over the first layer.

4. A sanitary apparatus comprising:

a water vessel; and
a drain configured to empty water or other material from the water vessel,
wherein the water vessel includes:

a clay body;
a first layer over the clay body, the first layer is at least in part an opacified glaze; and
a second layer over the first layer, the second layer is at least partially transparent and includes silica and alumina in a predetermined ratio of 9 or greater.

5. The sanitary apparatus of claim 4, wherein the second layer includes a weight percentage less than 5.4% of zinc oxide (ZnO) and/or wherein the second layer includes a weight percentage less than 2% of tin oxide ($SnO_2$) and/or wherein the predetermined ratio for silica and alumina is 13 or greater.

6. The sanitary apparatus of claim 4 or claim 5, wherein a mean particle size for the second layer is less than or equal to 3 $\mu$m and/or wherein the second layer has a fired thickness of less than 0.07 mm and/or wherein the second layer is prepared with silica particles with a mean particle size less than or equal to 6 $\mu$m.

7. The sanitary apparatus of claim 4, claim 5 or claim 6, wherein a color of the first layer is similar or the same as a color of the second layer over the first layer.

8. The sanitary apparatus of any one of claims 4 to 7, wherein color values including lightness, a first chromacity value, and a second chromacity value indicate a first color quantity for the first layer and a second color quantity for the second layer over the first layer.

9. The sanitary apparatus of claim 8, wherein the first color quantity for the first layer and the second color quantity for the second layer over the first layer have a difference less than 1.

10. The sanitary apparatus of claim 9, wherein a differ-

ence ($\Delta E$) is provided by:

$$\Delta E = [(\Delta L)^2] + [(\Delta a)^2] + [(\Delta b)^2]^{\frac{1}{2}}$$

wherein L is lightness and $\Delta L$ is a difference in lightness between the first layer and the second layer over the first layer, wherein a is the first color quantity and $\Delta a$ is a difference in the first color quantity between the first layer and the second layer over the first layer, and wherein b is the second color quantity and $\Delta b$ is a difference in the second color quantity between the first layer and the second layer over the first layer.

11. The sanitary apparatus of any one of claims 4 to 10, further comprising a toilet bowl, a basin, a bathtub, a bidet, or a urinal having the water vessel.

12. The sanitary apparatus of any one of claims 4 to 11, wherein the first layer is thicker than the second layer.

13. The sanitary apparatus of any one of claims 4 to 12, wherein the first layer is 5-20 times thicker than the second layer.

14. A method of manufacturing a sanitary apparatus, the method comprising:

forming a clay body;
spraying a first layer over the clay body, the first layer including an opacified glaze;
spraying a second layer over the clay body, the second layer including silica and alumina in a predetermined ratio of 9 or greater; and
firing the clay body including the first layer and the second layer.

15. The method of claim 14, wherein the first layer is thicker than the second layer, or the toilet of any one of claims 1 to 3, wherein the first layer has a thickness greater than the second layer.

FIG. 1A

FIG. 1B

FIG. 2

110

5000 µm

FIG. 3A

120

5000 µm

FIG. 3B

| Properties | Firing Thickness mm | | |
|---|---|---|---|
| | 0.2 | 0.1 | 0.07 |
| Ra nm | 47 | 54.3 | 59.1 |
| $\Delta L$ | -1.4 | -0.01 | 0.15 |
| $\Delta a$ | -0.9 | -0.34 | -0.21 |
| $\Delta b$ | 1.95 | 1.04 | 0.75 |
| $\Delta E$ | 2.57 | 1.09 | 0.79 |

200

FIG. 4

FIG. 5A

FIG. 5B

FIG. 6A

FIG. 6B

```
┌─────────────────────────┐        ┌─────────────────────────┐
│     GLAZE FORMATION     │        │     BODY FORMATION      │
│           325           │        │           321           │
└─────────────────────────┘        └─────────────────────────┘
              │                                  │
              ▼                                  ▼
┌─────────────────────────┐        ┌─────────────────────────┐
│  RHEOLOGICAL ADJUSTMENT │        │        CASTING          │
│           330           │        │           322           │
└─────────────────────────┘        └─────────────────────────┘
              │                                  │
              ▼                                  ▼
┌─────────────────────────┐        ┌─────────────────────────┐
│       APPLICATION       │◄───────│        DRYING           │
│           340           │        │           323           │
└─────────────────────────┘        └─────────────────────────┘
              │
              ▼
┌─────────────────────────┐
│        DRYING           │
│           345           │
└─────────────────────────┘
              │
              ▼
┌─────────────────────────┐
│        FIRING           │
│           350           │
└─────────────────────────┘
```

FIG. 7

S101

INPUT RAW MATERIALS.

S103

INPUT ADDITIVES.

S105

INPUT WATER FOR SPECIFIC GRAVITY.

S107

MILL THE GLAZE UNTIL RESIDUE LEVEL.

S109

FILTER AND SIEVE THE GLAZE.

S111

ADD WATER AND CARBOXYMETHYLCELLULOSE.

FIG. 8

```
┌─────────────────────────┐          ┌─────────────────────────┐
│  FIG. 8 FOR FIRST LAYER │          │   FIG. 8 FOR SECOND     │
│                         │          │         LAYER           │
└───────────┬─────────────┘          └───────────┬─────────────┘
  S201      │                          S203       │
            ▼                                     ▼
┌─────────────────────────┐          ┌─────────────────────────┐
│   SPRAY FIRST LAYER ON  │          │   SPRAY SECOND LAYER    │
│   UNFIRED VITREOUS      │─────────▶│   OVER FIRST LAYER      │
│         BODY            │          │                         │
└─────────────────────────┘          └───────────┬─────────────┘
  S205                                           │
            ▼                                     
┌─────────────────────────────────────────────────────────────┐
│   FIRE VITREOUS BODY WITH FIRST AND SECOND                   │
│                      LAYERS                                  │
└─────────────────────────────────────────────────────────────┘
```

FIG. 9

FIG. 8 FOR FIRST LAYER

S201

SPRAY FIRST LAYER ON UNFIRED VITREOUS BODY

S301

FIRE VITREOUS BODY WITH FIRST LAYER

FIG. 8 FOR SECOND LAYER

S303

SPRAY SECOND LAYER OVER FIRST LAYER

S305

REFIRE VITROUS BODY WITH SECOND LAYER

FIG. 10

Europäisches
Patentamt

European
Patent Office

Office européen
des brevets

## EUROPEAN SEARCH REPORT

Application Number

EP 24 17 1416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/084895 A1 (YASUDA RYO [JP] ET AL) 21 March 2019 (2019-03-21) <br> * paragraph [0003]; figure 2 * <br> * paragraphs [0035] - [0036] * <br> * paragraph [0040] * <br> * paragraphs [0043] - [0045], [0050] * <br> * paragraphs [0070] - [0072], [0080] * <br> * claims 1-9 * <br> ----- | 1-15 | INV. <br> C04B41/00 <br> C04B41/52 <br> C04B41/86 <br> C03C8/04 <br> C03C8/14 <br> C04B33/34 <br> E03D11/02 |
| X | US 6 383 646 B1 (TOMIOKA YUTAKA [JP] ET AL) 7 May 2002 (2002-05-07) <br> * column 2 - column 6; tables * <br> * examples 1-2 * <br> * column 1, line 66 - column 2, line 2 * <br> ----- | 1-15 | |
| X | EP 3 414 287 B1 (KALESERAMIK CANAKKALE KALEBODUR SERAMIK SANAYI ANONIM SIRKETI [TR]) 18 December 2019 (2019-12-18) <br> * paragraph [0001] * <br> * paragraphs [0011] - [0019], [0028] * <br> ----- | 1-5, 7-11,14 | |

TECHNICAL FIELDS SEARCHED (IPC)

C04B
E03D
C03C

The present search report has been drawn up for all claims

| Place of search | Date of completion of the search | Examiner |
|---|---|---|
| The Hague | 23 September 2024 | Sow, Eve |

EPO FORM 1503 03.82 (P04C01)

## ANNEX TO THE EUROPEAN SEARCH REPORT
## ON EUROPEAN PATENT APPLICATION NO.

EP 24 17 1416

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2024

| Patent document cited in search report | | Publication date | Patent family member(s) | | Publication date |
|---|---|---|---|---|---|
| US 2019084895 | A1 | 21-03-2019 | CN | 109503211 A | 22-03-2019 |
| | | | EP | 3459924 A1 | 27-03-2019 |
| | | | JP | 6967921 B2 | 17-11-2021 |
| | | | JP | 2019052062 A | 04-04-2019 |
| | | | US | 2019084895 A1 | 21-03-2019 |
| US 6383646 | B1 | 07-05-2002 | AT | E282014 T1 | 15-11-2004 |
| | | | AU | 766236 B2 | 09-10-2003 |
| | | | CN | 1302282 A | 04-07-2001 |
| | | | DE | 60015704 T2 | 22-12-2005 |
| | | | EP | 1110924 A1 | 27-06-2001 |
| | | | ES | 2232457 T3 | 01-06-2005 |
| | | | ID | 26916 A | 22-02-2001 |
| | | | JP | 3285035 B2 | 27-05-2002 |
| | | | KR | 20010113629 A | 28-12-2001 |
| | | | NZ | 516647 A | 28-08-2002 |
| | | | PL | 353479 A1 | 17-11-2003 |
| | | | TR | 200103620 T2 | 22-04-2002 |
| | | | TW | 572863 B | 21-01-2004 |
| | | | US | 6383646 B1 | 07-05-2002 |
| | | | WO | 0078689 A1 | 28-12-2000 |
| EP 3414287 | B1 | 18-12-2019 | EP | 3414287 A1 | 19-12-2018 |
| | | | WO | 2017138892 A1 | 17-08-2017 |

EPO FORM P0459

For more details about this annex : see Official Journal of the European Patent Office, No. 12/82

**REFERENCES CITED IN THE DESCRIPTION**

**Patent documents cited in the description**

- US 63461980
- US 63737124
- US 10793721 B

- US 6548162 B
- US 10183896 B